# EUROPEAN PATENT SPECIFICATION

(11) **EP 1 493 548 B1**
(45) Date of publication and mention of the grant of the patent: **29.11.2006**
(21) Application number: 04012417.4
(22) Date of filing: 26.05.2004
(51) Int. Cl.: B29C 59/00, B60R 21/20

(54) **Airbag cover, airbag module, and method of producing the airbag cover**
Gassackabdeckung, Gassackmodul, und Herstellungsverfahren für die Gassackabdeckung
Couvercle de sac gonflable, module de sac gonflable, et son procédé de fabrication

(30) Priority: 30.06.2003 JP 2003187626
(43) Date of publication of application: 05.01.2005
(73) Proprietor: TAKATA CORPORATION, Minato-ku, Tokyo 106-8510 (JP)
(72) Inventor: Soejima, Naoki, Tokyo 106-8510 (JP)
(74) Representative: Banzer, Hans-Jörg

(56) References cited:
- EP-A- 1 177 878
- EP-A- 1 193 140
- EP-A- 1 362 687
- DE-A- 10 042 264
- US-A- 5 968 381
- US-A1- 2002 043 144

## Description

### [Technical Field of the Invention]

The present invention relates to a technology of constructing an airbag cover for covering a vehicle airbag.

### [Description of the Related Art]

An airbag device which is mounted to a vehicle has an airbag cover for covering an airbag. The airbag cover has a tear line (linear groove) in an inner wall surface thereof, and allows deployment and inflation of the airbag outward from the airbag cover as a result of tearing at the tear line when the vehicle collides. As a technology in which a tear line is formed in an airbag cover by post-processing, a technology using, for example, laser cutting is known (refer to, for example, PCT Japanese Translation Patent Publication No. 2001-502996).

Document EP 1177 878 A1 discloses a method of producing an airbag cover for covering a vehicle airbag, the method comprising the step of:
post-processing a molded plate-shaped airbag cover by ultrasonic processing means such that a linear groove with a predetermined depth within the thickness of the airbag cover is continuously formed on the airbag cover, the method further comprising the step of determining a first distance t1 between a processing edge of the ultrasonic processing means and a flat upper face of the surface table that is used as reference.

### [Problems to be Solved by the Invention]

However, in such a technology of forming a tear line using laser cutting, there is a limit as to how much processing costs are reduced due to the use of a laser processing structure. To overcome this problem, the present inventor et al. devoted themselves to studying efficient technologies of forming a tear line in order to reduce costs of producing an airbag cover with a tear line that is formed by post-processing. The present inventor et al. conducted such studies considering that there is a great demand for a technology of forming a linear groove in an airbag cover whose shape is becoming complicated due to setting the airbag cover at various locations in recent years. As a result of the studies, the present inventor et al. were successful in finding out that a tear line can be formed even in an airbag cover with a complicated shape at a low cost by post-processing.

An object of the present invention is to provide an efficient technology of constructing an airbag cover for covering a vehicle airbag, and related technologies thereof.

### [Means for Solving the Problems]

According to the invention this object is achieved by a method of producing an airbag cover as defined in claim 1, an airbag cover as defined in claim 3 or an airbag module as defined in claim 4. The dependent claim defines a preferred and advantageous embodiment of the invention.

To this end, the inventions of the claims are provided, and are related to technologies applicable to various vehicles including automobiles, trains, motorcycles (vehicles that a rider sits astride), airplanes, and ships.

The invention relates to a method of producing an airbag cover for covering a vehicle airbag that is mounted to various vehicles. In the method, a three-dimensionally molded plate-shaped airbag cover is post-processed by ultrasonic processing means in order to form a linear groove in the airbag cover. In other words, in the present invention, using the ultrasonic processing means, a linear groove is formed in a molded airbag cover. The linear groove is a groove which is continuously formed with a predetermined depth within the thickness of the plate-shaped airbag cover. The linear groove is defined by a relatively thin portion of the airbag cover, and is what is called a tear line. The airbag cover is torn at the linear groove when the airbag is deployed and inflated.

In the specification, the term "ultrasonic processing means" is mainly used to widely include various structures which can process an object by transmitting (imparting) ultrasonic waves to the object. A typical example is a structure for processing an object with ultrasonic waves by operating a blade-like member (ultrasonic processing blade) upon the object. Examples of ultrasonic processing means other than a blade-like member include rod-shaped or plate-shaped ultrasonic processing means. A typical example of a processor using the ultrasonic processing means is a structure for controlling the operation of the ultrasonic processing blade to which ultrasonic waves are transmitted by a processing robot. By this, the operation of the ultrasonic processing blade is controlled so that it is carried out in a predetermined path.

According to the present invention, by using the ultrasonic processing means, it is possible to provide an efficient method of producing an airbag cover having a linear groove formed by post-processing. In other words, the processing speed when, for example, an ultrasonic processing blade is used as ultrasonic processing means is greater than the processing speed when laser is used (for example, approximately 1.5 times greater), so that the technology using the ultrasonic processing means is effective in increasing the efficiency with which the airbag cover is produced. In addition, it is possible to use a general-purpose machine in a facility of, for example, the ultrasonic processing means and a processing robot. Therefore, compared to a laser processing facility having a greater need for using a special-purpose machine, facility costs can be reduced.

As in the present invention, the technology of post-processing a three-dimensionally molded plate-shaped airbag cover using ultrasonic processing means makes it possible to meet the demands arising when the shapes of the airbag cover become complicated because it is set at various locations. As opposed to such a technology of the present invention, there is, for example, another technology in which a linear groove is two-dimensionally formed in an outer portion of the airbag cover in a plane by the ultrasonic processing means, and, then, this outer portion is disposed at a three-dimensionally molded location, so that the airbag cover has a three-dimensional form as a whole. However, when such a technology is used, there is a limit as to how much production costs are reduced because the process of producing the airbag cover becomes complicated. Accordingly, a technology, such as that of the present invention, of directly processing a three-dimensionally molded plate-shaped airbag cover by the ultrasonic processing means is effective in simplifying the production process. Therefore, according to the present invention, it is possible to reduce the production time as a result of simplifying the production process itself, in addition to reducing the production time by using the ultrasonic processing means having a high processing speed.

According to the present invention, by using the ultrasonic processing means, it is possible to provide a technology of processing a highly reliable linear groove which makes it possible for the airbag cover to tear when the airbag is deployed and inflated. In other words, when laser is used, due to structural reasons, grooves are formed discontinuously in the form of dots. Therefore, the depths of the grooves may be ununiform. However, when the ultrasonic processing means is used as in the present invention, a linear groove is continuously formed. In particular, by controlling the operation of the ultrasonic processing means by, for example, a processing robot, the depth of the groove can be uniform. A linear groove having uniform depth as in the present invention is effective in smoothly tearing the airbag cover when the airbag is deployed and inflated.

In the invention, before forming the linear groove, a first distance between a processing edge of the ultrasonic processing means, such as a cutting edge of an ultrasonic processing blade, and a predetermined location at the ultrasonic processing means can be determined. In addition, when the linear groove is to be formed, a second distance between a processing surface of the airbag cover and a predetermined location at the ultrasonic processing means can be determined. The first and second distances can be determined using, for example, information detected by a laser displacement meter. In the specification, the term "determine" is used to widely include a mode of directly obtaining predetermined data using a detector and a mode of obtaining predetermined data by further processing the data detected by the detector by, for example, computation. By the difference between the determined first and second distances, the distance that the ultrasonic processing means has penetrated from the processing surface of the airbag cover in a plate thickness direction during processing, that is, the depth of the linear groove or the residual thickness at the linear groove can be determined. Typically, after determining the depth of the linear groove, the residual thickness at the linear groove is determined from the depth of the linear groove.

According to the present invention, it is possible to indirectly estimate the depth of the linear groove from the first and second distances, so that it can be estimated without directly measuring the depth of the linear groove. When the depth of the linear groove is to be directly measured, it is difficult to precisely measure the depth of the linear groove unless the width of the linear groove (length of the linear groove in a direction perpendicular to the direction of extension of the linear groove) is a certain value. However, if the width of the linear groove is increased, the airbag cover may be less properly torn at the linear groove. To overcome this problem, the depth of the linear groove can be indirectly measured from the first and second distances as in the present invention, thereby making it possible to maintain a good tearing ability at the linear groove of the airbag cover.

An airbag cover has a three-dimensionally molded plate-shaped structure, and has a linear groove which is continuously formed with a predetermined depth within the thickness of the airbag cover. The linear groove is formed by post-processing. Typically, the linear groove is formed by ultrasonic processing means as described before.

The linear groove in the present invention has a uniform depth compared to, for example, grooves formed discontinuously in the form of dots by laser processing, so that the linear groove is effective in allowing smooth tearing of the airbag cover when a vehicle airbag is deployed and inflated.

A structure of an airbag module comprises, for example, a vehicle airbag, an accommodating member for accommodating the vehicle airbag, gas supplying means for supplying inflation gas to the vehicle airbag, and an airbag cover which is substantially the same as that described according to the first aspect of the invention. The whole airbag module is mounted to a vehicle. The airbag module may also include a member to which the airbag cover is disposed, that is, what is called an instrument panel.

It is possible to provide an efficient technology of constructing an airbag module which is effective in allowing smooth tearing of the airbag cover when the vehicle airbag is deployed and inflated.

### [Brief Description of the Drawings]

Fig. 1 shows the structures of an airbag cover 100 and an ultrasonic processor 200 of the embodiments, with the ultrasonic processor 200 processing the airbag cover 100.
Fig. 2 is a flowchart of the steps of processing the airbag cover 100 with ultrasonic waves by the ultrasonic processor 200.
Fig. 3 is a schematic view illustrating Steps S20 to S30 in Fig. 2.
Fig. 4 is a schematic view illustrating Step S24 in Fig. 2.
Fig. 5 is a schematic view illustrating Step S28 in Fig. 2.
Fig. 6 is a schematic view illustrating Step S28 in Fig. 2.
Fig. 7 is a sectional view of a form of a tear line 102 formed in the airbag cover 100 by carrying out the ultrasonic processing process illustrated in Fig. 2.
Fig. 8 is a sectional view taken in a direction of extension of the tear line 102 shown in Fig. 7.
Fig. 9 is a sectional view of a form of a tear line 103 formed by laser processing.
Fig. 10 is a sectional view of the structure of an airbag module, with the airbag cover 100 being torn.

### [Description of the Embodiments]

Hereunder, a description of embodiments of the present invention will be given with reference to the drawings. The embodiment is that of a technology of forming a tear line 102 by ultrasonic processing in a back surface 101 of an airbag cover 100 for covering a vehicle airbag.

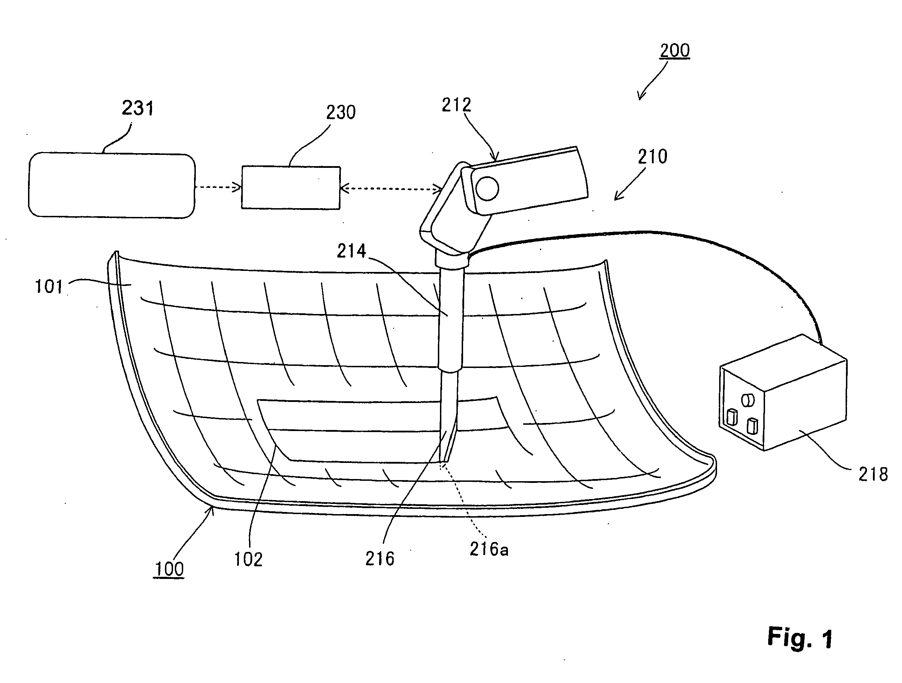

First, the structures of the airbag cover 100 and an ultrasonic processor 200 will be described with reference to Fig. 1. Fig. 1 shows the structures of the airbag cover 100 and the ultrasonic processor 200 of the embodiments, with the ultrasonic processor 200 processing the airbag cover 100.

The airbag cover 100 shown in Fig. 1 is a plate-shaped cover which has been three-dimensionally molded out of resin material such as a polypropylene (PP) material or an olefin elastomer (TPO) material. The back surface 101 of the airbag cover 100 is defined as such when the surface of the airbag cover 100 that opposes a rider is defined as the front surface. The tear line 102 is defined by a thin portion of the airbag cover 100 in order to allow tearing of the airbag cover 100 when the airbag is deployed and inflated, and is, in the embodiment, a linear groove formed in the back surface 101 of the airbag cover 100. The tear line 102 corresponds to the "linear groove which is continuously formed with a predetermined depth within the thickness of the airbag cover" in the present invention.

As shown in Fig. 1, the ultrasonic processor 200 roughly comprises a drive section 210 and an NC control section 230. The drive section 210 comprises, for example, a drive arm 212, an ultrasonic oscillation portion 214, an ultrasonic processing blade 216, and an ultrasonic wave oscillator 218.

The drive arm 212 forms a portion of a processing robot, and is controlled based on an input signal from the NC control section 230 in order to adjust the position of a cutting edge 216a of the ultrasonic processing blade 216. The ultrasonic oscillation portion 214 transmits ultrasonic waves oscillated by the ultrasonic wave oscillator 218 to the ultrasonic processing blade 216. The cutting edge 216a of the ultrasonic processing blade 216 may have a width of, for example, 1 mm. The ultrasonic processing blade 216 corresponds to the "ultrasonic processing means" in the present invention, and the cutting edge 216a of the ultrasonic processing blade 216 corresponds to the "processing edge" in the present invention. As long as a member can process an object by transmitting (imparting) ultrasonic waves to the object, for example, a rod-shaped or a plate-shaped member may be used in addition to a blade-like member such as the ultrasonic processing blade 216 in the embodiment. As the ultrasonic wave oscillator 218, an ultrasonic wave oscillator which can oscillate ultrasonic waves having a frequency of, for example, 22 kHz is used. The ultrasonic processor 200 in the embodiment also comprises displacement meters 221 and 222, and an image testing camera 223, which are described later.

The NC control section 230 is used for processing processing data for forming the tear line 102 in the back surface 101 of the airbag cover 100. Although not particularly illustrated, the NC control section 230, for example, inputs, computes, and outputs data for processing the airbag cover 100.

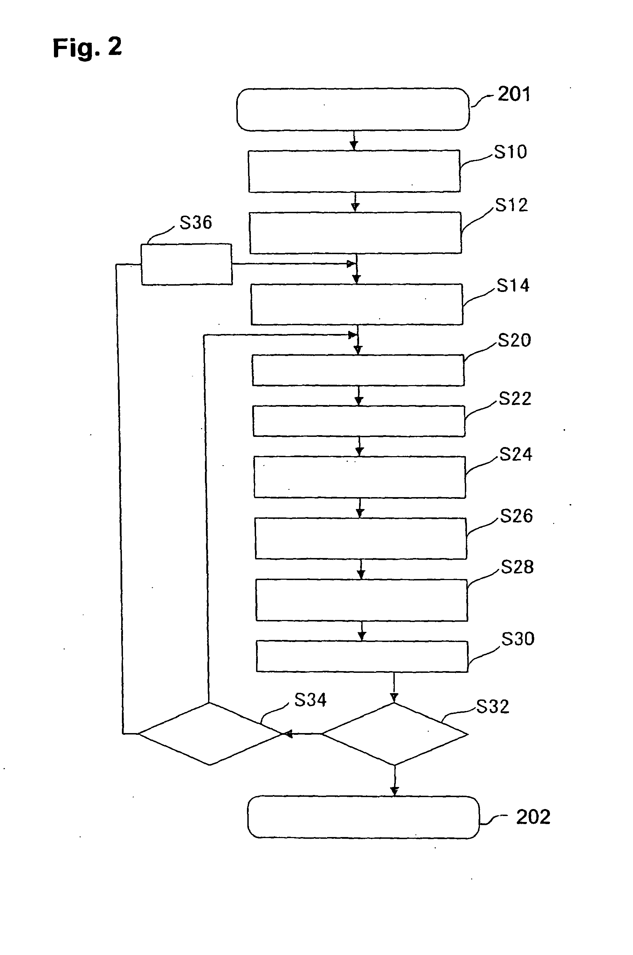

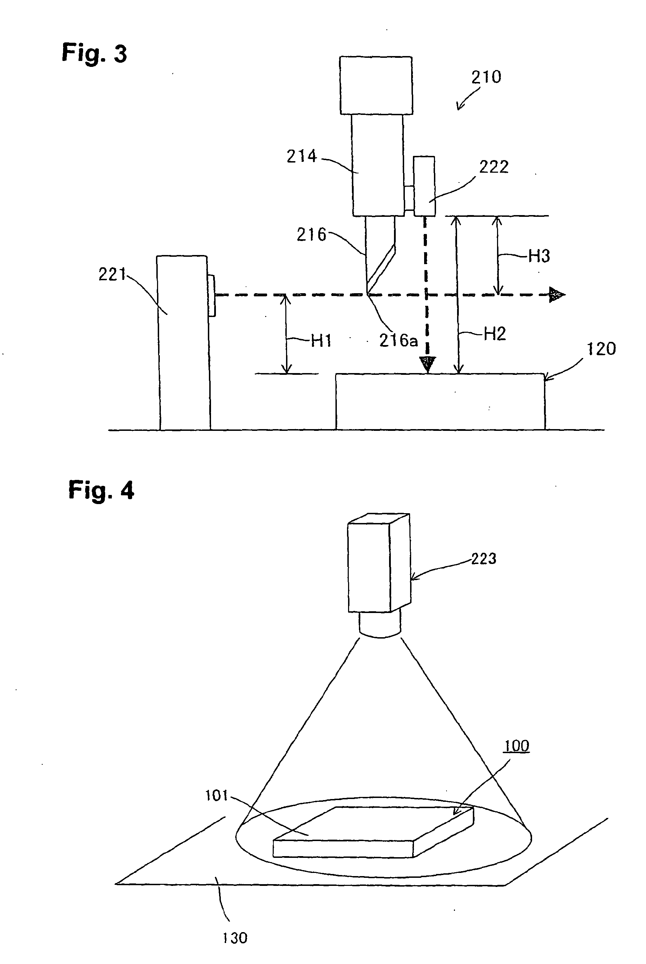

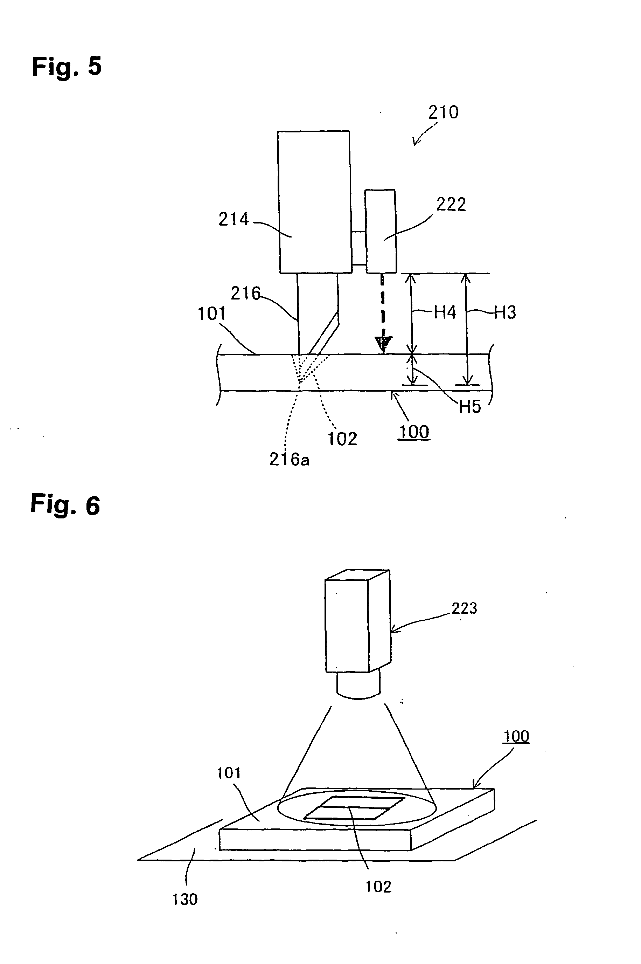

Next, the steps of forming the tear line 102 by post-processing the molded airbag cover 100 using the ultrasonic processor 200 having the above-described structure will be described with reference to Figs. 2 to 6. Fig. 2 is a flowchart of the steps of processing the airbag cover 100 with ultrasonic waves using the ultrasonic processor 200. Fig. 3 is a schematic view illustrating Steps S20 to S30 in Fig. 2. Fig. 4 is a schematic view illustrating Step S24 in Fig. 2. Figs. 5 and 6 are schematic views illustrating Step S28 in Fig. 2.

The processing process (ultrasonic processing process 201) in the embodiment is roughly divided into a data processing process of processing processing data before processing the airbag cover 100 and an actual processing process of actually processing the airbag cover 100 by the ultrasonic processor.

### (Data Processing Process)

In the data processing process, processing data is obtained before actually processing the airbag cover 100. The data processing process comprises Steps S10 to S14 as shown in Fig. 2.

First, in Step S10, designing is performed by computer-aided design (CAD) based on design information of the airbag cover 100 in order to generate CAD data (processing data). Here, for example, design information that is previously stored in a computer is output on a graphic display device to carry out the designing while watching the screen of the graphic display device.

In Step S12, the CAD data obtained in Step S10 is converted by computer-aided manufacturing (CAM) in order to generate CAM data. The CAM data is processing data (data for NC operation) at the NC control section 230.

In Step S14, the CAM data 231 (processing data) obtained in Step S12 is input to the NC control section 230 in order to carry out CAM data teaching. In the embodiment, the CAM data that is input to the NC control section 230 once can be corrected at the NC control section 230 based on actual processing results.

### (Actual Processing Process)

When the data processing process is completed, the airbag cover 100 is actually processed. The actual processing process comprises Steps S20 to S30 as shown in, for example, Fig. 2.

First, in Step S20, prior to processing the airbag cover 100, a processing start position (origin) of the ultrasonic processing blade 216 is confirmed. The confirmation is carried out using, for example, the displacement meters 221 and 222 of laser types. The displacement meter 221 is disposed at a base, and the displacement meter 222 is disposed at the ultrasonic processing blade 216 of the drive section 210. In such a structure, as shown in Fig. 3, the displacement meter 221 detects a height H1 (distance) from the top surface of a reference block 120 to the cutting blade 216a of the ultrasonic processing blade 216. The displacement meter 222 detects a height H2 (distance) from the top surface of the reference block 120 to the displacement meter 222. Then, by calculating the difference between the detected heights H1 and H2 (H2 - H1), a height H3 from the displacement meter 222 to the cutting edge 216a of the ultrasonic processing blade 216 is obtained (determined). The displacement meter 222 corresponds to the "predetermined location at the ultrasonic processing means" in the present invention. By this, the processing start position (origin) of the ultrasonic processing blade 216 is determined. The height H3 corresponds to the "first distance" in the present invention, and Step S20 corresponds to the "step of determining a first distance" in the present invention.

The number of detection points for detecting the height H1 with the displacement meter 221 and that for detecting the height H2 by the displacement meter 222 in Step S20 may be set as required considering, for example, the shape of the airbag cover 100. For example, it is desirable that the more complicated the shape of the airbag cover 100 is, a larger number of detection points for detecting the heights H1 and H2 be used.

Next, in Step S22, the airbag cover 100 is set on a receiver jig (receiver jig 130 in Fig. 4). Then, in Step S24, the set state of the airbag cover 100 is confirmed.

Although not particularly illustrated, the receiver jig 130 has an attracting mechanism using air. By operating the attracting mechanism, the airbag cover 100 can be attracted to and held by the receiver jig 130. The attracting mechanism has a structure which allows detection of attraction pressure. In such a structure, the state of contact between the airbag cover 100 and the receiver jig 130 is confirmed by the attraction pressure of the attracting mechanism, and, as shown in Fig. 4, any shifts in the position of the airbag cover 100 is confirmed by the image testing camera 223. By this, a worker can confirm the set state of the airbag cover 100.

In Step S26, the actual processing of the airbag cover 100 by the ultrasonic processing blade 216 is started. Here, the ultrasonic wave oscillator 218 oscillates ultrasonic waves having a frequency of, for example, 22 kHz, and transmits them to the ultrasonic processing blade 216 through the ultrasonic oscillation portion 214. Based on an input signal from the NC control section 230, the drive arm 212 is controlled in order to adjust the position of the cutting edge 216a of the ultrasonic processing blade 216. By this, the processing operation of the ultrasonic processing blade 216 is controlled so that it is carried in a predetermined path. The processing speed of the ultrasonic processing blade 216 may be, for example, 30 mm/sec. This processing speed is 1.5 times greater than a laser processing speed of 20 mm/sec, so that this method is effective in increasing the efficiency with which the airbag cover 100 is produced.

Processing conditions, such as the frequency of the ultrasonic waves oscillated from the ultrasonic oscillator 218 and the processing speed of the ultrasonic processing blade 216, can be set as required based on conditions of the object to be processed, such as the material or thickness of the airbag cover.

In Step S28, the state of processing by the ultrasonic processing blade 216 when the ultrasonic processing blade 216 is processing the airbag cover 100 in Step S26 is confirmed. Here, as shown in Fig. 5, the displacement meter 222 detects a height H4 (distance) from the back surface 101 of the airbag cover 100 to the displacement meter 222. The height H4 corresponds to the "second distance" in the present invention.

By calculating the difference (H3 - H4) between the height H3 (from the displacement meter 222 to the cutting edge 216a of the ultrasonic processing blade 216) previously detected in Step S20 and the height H4, a processing depth (cut depth) H5 of the tear line 102 can be obtained (determined). Accordingly, in the embodiment, the processing depth H5 of the tear line 102 is indirectly estimated based on other detection information, so that the processing depth H5 of the tear line 102 can be estimated without directly detecting it. Based on the processing depth H5 and control data of the NC control section 230, it is possible to confirm the residual thickness at the location of the tear line 102 of the airbag cover 100 ("residual thickness" in the present invention). The processing depth H5 corresponds to the "depth of the linear groove" in the present invention, and Step S28 corresponds to the "step of determining a second distance" in the present invention. In this way, the airbag cover 100 with the tear line 102 having a predetermined depth is produced.

In Step S28, the number of detection points for detecting the height H4 by the displacement meter 222 may be set as required considering, for example, the shape of the airbag cover 100. For example, it is desirable that the more complicated the shape of the airbag cover 100 is, a larger number of detection points for detecting the height H4 be used. As shown in Fig. 6, the processing path of the tear line 102 is confirmed by the image testing camera 223.

In Step S30, the processing start position (origin) of the ultrasonic processing blade 216 is reconfirmed by carrying out the operations that are similar to those in Step S20.

After Step S30 is completed, a determination is made in Step S32 as to whether or not to process another airbag cover. If it is determined that another airbag cover is not to be processed in Step S32, the processing ends at 202. In contrast, if it is determined that another airbag cover is to be processed in Step S32, a determination is made in Step S34 as to whether or not processing data is to be corrected from the time of processing. If it is determined that the processing data is to be corrected in Step S34, the processing data is corrected in Step S36, after which the process returns to Step S14. In contrast, if it is determined that the processing data is not to be corrected in Step S34, the process returns to Step S20.

As described above, in the embodiment, since the ultrasonic processing blade 216 is used, the airbag cover 100 can be processed at a speed that is, for example, 1.5 times greater than the laser processing speed, so that this method is effective in increasing the efficiency with which the airbag cover 100 is produced. In addition, it is possible to use a general-purpose machine in a facility of, for example, the ultrasonic processing blade 216 and a processing robot. Therefore, compared to a laser processing facility having a greater need for a special-purpose machine, facility costs can be reduced.

As opposed to the embodiment, there is, for example, another technology in which a linear groove is two-dimensionally formed in an outer portion of an airbag cover in a plane by an ultrasonic processing blade, and, then, this outer portion is disposed at a three-dimensionally molded location, so that the airbag cover has a three-dimensional form as a whole. However, when such a technology is used, there is a limit as to how much production costs are reduced because the process of producing the airbag cover becomes complicated. Accordingly, a technology, such as that of the present invention, of directly processing a three-dimensionally molded plate-shaped airbag cover by the ultrasonic processing blade is effective in simplifying the production process. Therefore, according to the present invention, it is possible to reduce the production time as a result of simplifying the production process itself, in addition to reducing the production time by using the ultrasonic processing blade having a high processing speed.

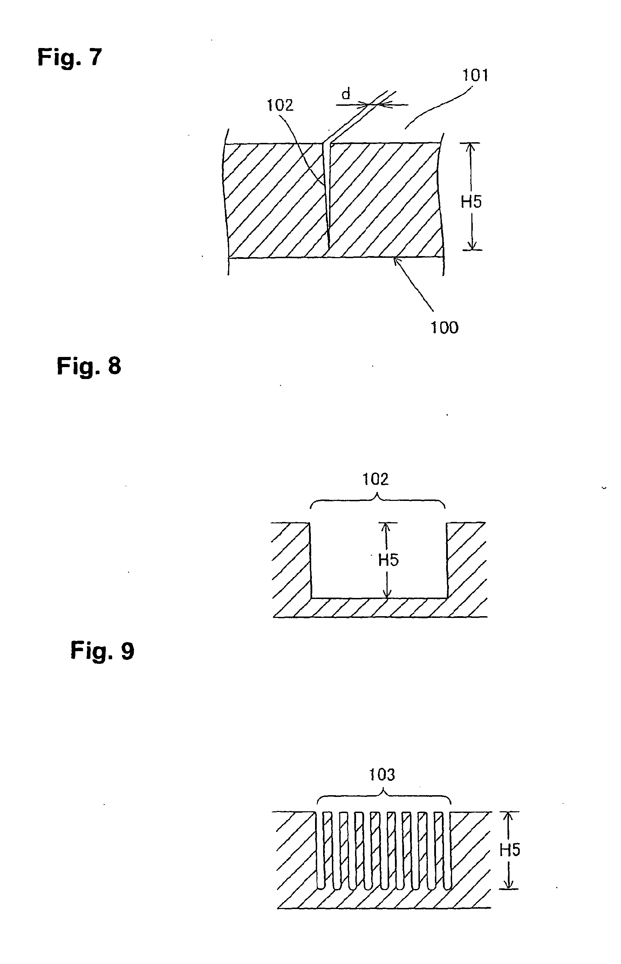

According to the embodiment, by using the ultrasonic processing blade 216, the tear line 102, which is a linear groove, can be continuously formed, so that the groove can have a uniform depth. Therefore, compared to the case in which grooves are formed in the form of dots by laser processing, the linear groove is effective in allowing smooth tearing of the airbag cover 100 when an airbag is deployed and inflated. In other words, in the embodiment, by processing the airbag cover 100 by the ultrasonic processing blade 216 in Step S26, for example, the tear line 102 (having the depth H5 and a width d in the back surface 101) that is defined by sharp portions in cross section as shown in Figs. 7 and 8 can be formed. In contrast, when laser processing is carried out, for example, a tear line 103 comprising grooves that are discontinuously formed in the form of dots as shown in Fig. 9 is formed. Even if the distances between the dot-shaped grooves are decreased in the tear line 103 shown in Fig. 9, there is a limit as to how close the tearing ability at the tear line 103 can be compared to the tearing ability at the tear line 102 in the embodiment.

When the depth of the tear line 102 is to be directly measured, the depth of the tear line 102 which is defined by the sharp portions in cross section in the embodiment may not be precisely measured. However, since, in the embodiment, the depth of the tear line 102 is indirectly measured, the tear line 102 can be defined by the sharp portions in cross section. The tear line 102 defined by the sharp portions in cross section is effective in maintaining a good tearing ability during the deployment and inflation of the airbag.

When the three-dimensional form of the airbag cover, which is an object to be processed, is complicated, it is sometimes difficult to directly detect the processing depth H5 of the tear line 102. Since, in the embodiment, information regarding the processing depth H5 of the tear line 102 is constantly detected during the processing to determine a highly reliably processing depth H5, the embodiment is particularly effective in reliably forming the tear line 102 with a predetermined depth in the three-dimensionally molded airbag cover.

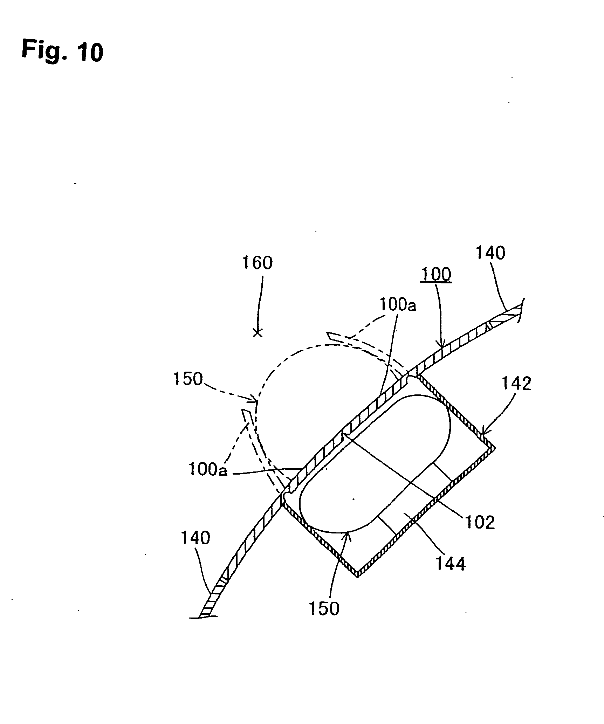

The airbag cover 100 produced by the above-described method may be incorporated in a vehicle, for example, as shown in Fig. 10. In other words, parts such as the airbag cover 100, an instrument panel 140 at which the airbag cover 100 is disposed, a vehicle airbag 150, an accommodating member (retainer) 142 in which the vehicle airbag 150 is accommodated in a folded state, and gas supplying means (inflator) 144, disposed in the accommodating member 142, for supplying inflation gas to the vehicle airbag 150 may form an airbag module.

When a vehicle collides at a location which is situated in front of the vehicle, the gas supplying means 144 operates to deploy the vehicle airbag 150 by inflation gas supplied from the gas supplying means 144. The airbag cover 100 is torn at the tear line 102 during the deployment and inflation of the vehicle airbag 150, so that, for example, a pair of deployment doors 100a are both opened towards the front surface of the airbag cover 100. In this way, the vehicle airbag 150 is deployed outward from the airbag cover 100 through the deployment doors 100a that are opened, so that it is further deployed and inflated while protruding towards a rider protection area 160 that is situated in front of a rider.

### [Advantages]

The present invention provides an efficient technology of constructing an airbag cover for covering a vehicle airbag, and related technologies thereof.

## Claims

1. A method of producing an airbag cover for covering a vehicle airbag, the method comprising the step of:
post-processing a three-dimensionally molded plate-shaped airbag cover (100) by ultrasonic processing means (216) such that a linear groove (102) with a predetermined depth within the thickness of the airbag cover (100) is continuously formed on the airbag cover (100), the method further comprising the step (S20) of determining a first distance (H3) between a processing edge (216a) of the ultrasonic processing means (216) and a predetermined location (222) at the ultrasonic processing means (216) before forming the linear groove (102) and the step (S28) of determining a second distance (H4) between a processing surface (101) of the airbag cover (100) and the predetermined location (222) at the ultrasonic processing means (216) during the formation of the linear groove (102) in order to estimate a depth (H5) of the linear groove (102) or a residual thickness at the linear groove (102) based on the determined first (H3) and second (H4) distances.

## Patentansprüche

1. Verfahren zur Herstellung einer Airbagabdeckung zum Abdecken eines Fahrzeugairbags, wobei das Verfahren die Schritte umfasst:
Nachbearbeiten einer dreidimensional modellierten, plattenförmigen Airbagabdeckung (100) durch Ultraschallbehandlungsmittel (216) derart, dass eine lineare Nut (102) mit einer vorbestimmten Tiefe innerhalb der Dicke der Airbagabdeckung (100) kontinuierlich auf der Airbagabdeckung (100) ausgebildet wird,
wobei das Verfahren ferner den Schritt (S20) des Bestimmens einer ersten Entfernung (H3) zwischen einer Behandlungskante (216a) der Ultraschallbehandlungsmittel (216) und einer vorbestimmten Stelle (222) an den Ultraschallbehandlungsmitteln (216), bevor die lineare Nut (102) ausgebildet wird, und den Schritt (S28) des Bestimmens eines zweiten Abstands (H4) zwischen einer Behandlungsoberfläche (101) der Airbagabdeckung (100) und der vorbestimmten Stelle (222) an den Ultraschallbehandlungsmitteln (216) während der Ausbildung der linearen Nut (102) umfasst, um eine Tiefe (H5) der linearen Nut (102) oder eine Restdicke an der linearen Nut (102) basierend auf den ersten (H3) und zweiten (H4) bestimmten Abständen zu bestimmen.

## Revendications

1. Procédé de production d'un couvercle de coussin gonflable destiné à recouvrir un coussin gonflable de véhicule, le procédé comprenant l'étape consistant à:
post-traiter une couvercle de coussin gonflable moulé de manière tridimensionnelle sous forme de plaque (100) par des moyens de traitement à ultrasons (216) de manière à ce qu'une rainure linéaire (102) avec une profondeur prédéterminée dans l'épaisseur du couvercle de coussin gonflable (100) soit formée de manière continue sur le couvercle de coussin gonflable (100), le procédé comprenant en outre l'étape (S20) consistant à déterminer une première distance (H3) entre un bord de traitement (216a) des moyens de traitement à ultrasons (216) et un emplacement prédéterminé (222) au niveau des moyens de traitement à ultrasons (216) avant de former la rainure linéaire (102), ainsi que l'étape (S28) consistant à déterminer une seconde distance (H4) entre une surface à traiter (101) du couvercle de coussin gonflable (100) et l'emplacement prédéterminé (222) au niveau des moyens de traitement à ultrasons (216) au cours de la formation de la rainure linéaire (102) afin d'estimer une profondeur (H5) de la rainure linéaire (102) ou une épaisseur résiduelle au niveau de la rainure linéaire (102) à partir des première (H3) et seconde (H4) distances déterminées.
